# EUROPÄISCHE PATENTSCHRIFT

(11) **EP 2 803 147 B1**
(45) Veröffentlichungstag und Bekanntmachung des Hinweises auf die Patenterteilung: **27.07.2016**
(21) Anmeldenummer: 12812852.7
(22) Anmeldetag: 19.12.2012
(51) Int. Cl.: H04B 7/185

(54) **BORDKOMMUNIKATIONSGERÄTE FÜR EINE KABINE EINES FAHRZEUGS, JEDES MIT EINEM MEDIENSERVER UND EINEM FUNKMODUL, MITTELS DESSEN DIESE DRAHTLOS MITEINANDER VERBUNDEN SIND.**
ON-BOARD COMMUNICATION APPARATUSES FOR A CABIN OF A VEHICLE EACH WITH A MEDIA SERVER AND A RADIO MODULE WHICH WIRELESSLY LINK THEM TOGETHER.
APPAREILS DE COMMUNICATION EMBARQUÉS POUR UNE CABINE DE VÉHICULE CHACUN MUNI D'UN SERVEUR DE MÉDIA ET D'UN MODULE RADIO LES RELIANT ENTRE EUX.

(30) Priorität: 13.01.2012 DE 102012200487
(43) Veröffentlichungstag der Anmeldung: 19.11.2014
(73) Patentinhaber: Lufthansa Technik AG, 22335 Hamburg (DE)
(72) Erfinder: WENDE, Gerko, 20251 Hamburg (DE); NISS, Frank, 22453 Hamburg (DE); GOESSEL, Alexander, 22395 Hamburg (DE); MUIRHEAD, Andrew, 22848 Norderstedt (DE)
(74) Vertreter: Müller Verweyen
(86) Internationale Anmeldenummer: PCT/EP2012/005250
(87) Internationale Veröffentlichungsnummer: WO 2013/104403

(56) Entgegenhaltungen:
- EP-A1- 1 598 255
- DE-A1-102004 049 895
- US-A1- 2009 081 947
- US-B1- 7 483 696

## Beschreibung

Die Erfindung betrifft ein Bordkommunikationsgerät und -system für eine Kabine eines Fahrzeugs, wobei das Bordkommunikationsgerät mindestens einen Medienserver und mindestens einen Funkdatenzugangspunkt mit einer Funkeinheit zur drahtlosen Übertragung von Mediendaten von dem Medienserver des Bordkommunikationsgerätes auf mindestens ein Passagiergerät in der Kabine umfasst.

In Kabinen von Fahrzeugen zum Personentransport, wie beispielsweise Flugzeugkabinen, werden Unterhaltungs- und Kommunikationssysteme genutzt, die den Passagieren Unterhaltungsinhalte in Form von z.B. Filmen und Musik und Kommunikationsinhalte, wie z.B. Radio, Fernsehen, Telefon und Internetzugang, anbieten. Diese Inhalte können den Passagieren über bordgebundene Geräte zugänglich gemacht werden. Dies kann beispielsweise über Bildschirme in der Kabine für mehrere Passagiere oder auf einzelnen sitzgebundenen Bildschirmen erfolgen.

Zur weiteren Individualisierung können Unterhaltungs- bzw. Medieninhalte zur Unterhaltung während der Reisezeit auf Passagiergeräte übertragen werden. Die Passagiergeräte sind Geräte, die zu Kommunikationszwecken oder zur Darstellung von Medieninhalten geeignet sind. Sie werden von den Passagieren mitgebracht und können verschiedene Typen und Modelle sein. Typische Passagiergeräte sind Laptops, Tablet-PCs und Smartphones.

Solche Unterhaltungssysteme bestehen regelmäßig aus einem Medienserver, in dem die entsprechenden Medieninhalte gespeichert sind und die Datenverarbeitung erfolgt, und aus Funkzugangspunkten in der Kabine, die in einem kabelgebundenen Netzwerk mit dem Medienserver verbunden sind. Die Passagiergeräte sind über den Funkdatenzugangspunkt mit dem Medienserver verbunden, so dass die Passagiere über ihre Passagiergeräte Medieninhalte auswählen und nutzen können.

Ein solches Unterhaltungssystem weist einen hohen Installationsaufwand auf, um die notwendige Verkabelung zwischen den einzelnen Komponenten, wie Medienserver und den im Fahrzeug verteilten Funkdatenzugangspunkten, zu erreichen. Diese Verkabelung ist sehr aufwendig, insbesondere ist dies bei Luftfahrzeugen aufgrund der erhöhten Anforderungen und der zusätzlich notwendigen luftfahrtrechtlichen Zulassung der Fall. Allgemein ist eine Verkabelung von einzelnen Komponenten, die im Luftfahrzeug verteilt montiert werden, um eine adäquate Abdeckung bzw. Versorgung mit Funkdatenzugangspunkten in der ganzen Kabine zu ermöglichen, vor allem bei einer Nachrüstung eines Unterhaltungssystems sehr aufwendig. Weiterhin ist das zusätzliche Gewicht, das durch die Verkabelung in das Fahrzeug eingebracht wird, insbesondere bei Luftfahrzeugen, nachteilig. Die Mehrzahl von unterschiedlichen Komponenten ist für einen Austausch und eine Reparatur von Komponenten unvorteilhaft, da alle Komponenten als Ersatzteil vorgehalten werden müssen.

EP 1 598 255 A1 offenbart ein Bordkommunikationsgerät, das einen Funkdatenzugangspunkt zur drahtlosen Übertragung von Daten (in-car WLAN) auf mindestens ein Passagiergerät in der Kabine umfasst. Des Weiteren ist das Bordkommunikationsgerät zur drahtlosen Kommunikation (inter-car WLAN) mit einem weiteren Bordkommunikationsgerät eingerichtet.

US 2009/0081947 A1 offenbart ein Bordkommunikationsgerät, das einen Medienserver und mindestens einen Funkdatenzugangspunkt zur drahtlosen Übertragung von Mediendaten von dem Medienserver auf mindestens ein Passagiergerät in der Kabine umfasst.

Die Aufgabe der Erfindung ist es, ein Bordkommunikationsgerät und -system für eine Kabine eines Fahrzeugs anzugeben, das sich durch geringes Gewicht, einfache Installation und Wartbarkeit auszeichnet.

Diese Aufgabe wird ausgehend von dem Oberbegriff des Anspruchs 1 in Verbindung mit dessen kennzeichnenden Merkmalen gelöst. Ein Bordkommunikationsgerät für eine Kabine eines Fahrzeugs umfasst mindestens einen Medienserver und mindestens einen Funkdatenzugangspunkt mit einer Funkeinheit zur drahtlosen Übertragung von Mediendaten von dem Medienserver des Bordkommunikationsgerätes auf mindestens ein Passagiergerät in der Kabine. Erfindungsgemäß weist das Bordkommunikationsgerät mindestens ein Funkmodul zur drahtlosen Kommunikation des Bordkommunikationsgeräts mit einem weiteren Bordkommunikationsgerät auf.

Ein erfindungsgemäßes Funkmodul zur drahtlosen Kommunikation des Bordkommunikationsgeräts mit einem weiteren Bordkommunikationsgerät ist besonders vorteilhaft, weil eine von drahtlosen Datenverbindungen zu Passagiergeräten über den Funkdatenzugangspunkt unabhängige, drahtlose Kommunikation bzw. drahtlose Vernetzung zwischen mehreren Bordkommunikationsgeräten in einem Fahrzeug möglich ist. Der Betrieb des Funkmoduls kann im Bordkommunikationsgerät vorzugsweise unabhängig vom Betrieb der Funkeinheit erfolgen. Das Funkmodul ist erfindungsgemäß unabhängig von der Funkeinheit.

Die Eignung des Funkmoduls zur drahtlosen Kommunikation mit mindestens einem weiteren Bordkommunikationsgerät hat den Vorteil, dass der Installations- und Wartungsaufwand minimiert wird. Eine aufwendige Verkabelung einzelner Komponenten, die für die Funknetzabdeckung im Fahrzeug verteilt eingebaut werden müssen, entfällt. Weiterhin wird durch die Integration von Medienserver und Funkdatenzugangspunkt Verkabelungsaufwand zwischen diesen Einheiten ebenfalls vermieden. Weiterhin erhöht sich insgesamt die Redundanz des Systems gegenüber beispielsweise Ausfall einzelner Bordkommunikationsgeräte und korrupten Datensätzen auf Speichermedien eines Bordkommunikationsgerätes. Zudem ergibt sich durch die Verwendung nur eines Bordkommunikationsgerätes eine stark vereinfachte Wartbarkeit, Ersatzteilversorgung und Austauschbarkeit.

Vorzugsweise ist mit dem Bordkommunikationsgerät drahtloser Datenaustausch mit mindestens einem weiteren baugleichen Bordkommunikationsgerät ohne Einschränkungen der möglichen Übertragungsraten von drahtlosen Datenübertragungen zwischen dem Bordkommunikationsgerät und Passagiergeräten durchführbar.

Der Medienserver kann kleiner und günstiger ausgelegt werden, da ein Medienserver nicht alle Mediendaten für eine sehr große Anzahl von Passagiergeräten parallel auslesen und verteilen muss. Der Medienserver wird für eine Anzahl von möglichen Passagieren bzw. Passagiergeräten ausgelegt, wobei die Leistungsfähigkeit des Medienservers an die mögliche Funkabdeckung angepasst ist. Die Leistungsfähigkeit ist hierbei vorzugsweise unabhängig vom speicherbaren Datenvolumen. Übersteigt die Passagieranzahl bzw. die Anzahl der Passagiergeräte im Fahrzeug die Leistungsfähigkeit eines Bordkommunikationsgerätes, kann das Fahrzeug durch ein weiteres Bordkommunikationsgerät an die benötigte Leistungsfähigkeit angepasst werden.

Der Einsatz einer Funkeinheit des Funkdatenzugangspunkts für die Übertragung von Medieninhalten, wie z.B. Filme und Musik, und eines unabhängigen Funkmoduls für die Kommunikation mit anderen Bordkommunikationsgeräten ermöglicht eine Kommunikation ohne Einschränkung der Datenverbindung bzw. Übertragungsraten zu den Passagiergeräten, so dass auch bei gleichzeitiger Kommunikation mit anderen Bordkommunikationsgeräten den Passagiergeräten eine gleichbleibende Verbindungsqualität für das Laden von Medieninhalten vom Medienserver des Bordkommunikationsgerätes möglich ist, was von besonderer Bedeutung ist, um eine gleichbleibende gute Verbindungsqualität zu gewährleisten.

In einer vorteilhaften Ausführungsform weisen das Funkmodul und die Funkeinheit unterschiedliche Frequenzbereiche auf. Unterschiedliche Frequenzbereiche von Funkmodul und Funkeinheit sind für das Bordkommunikationsgerät vorteilhaft, weil durch die eindeutige Trennung der Frequenzen ein unabhängiger Betrieb ohne gegenseitige negative Beeinflussung in einfacher Weise erreicht werden kann.

In einer weiteren vorteilhaften Ausführungsform weisen die Funkeinheit des Funkdatenzugangspunkts und das Funkmodul unterschiedliche Kanäle und/oder Datenprotokolle auf, was vorteilhaft für eine unabhängige Datenverbindung zu Passagiergerät und zu weiteren Bordkommunikationsgeräten ist, so dass bei beiden Arten von Kommunikationspartnern eine hohe Datenübertragungsrate erreicht werden kann.

In einer bevorzugten Ausführungsform ist mindestens ein Bordkommunikationsgerät im Fahrzeug mit einer Bordkommunikationseinrichtung des Fahrzeugs für externe Datenverbindungen verbunden. Bordkommunikationseinrichtungen können verschiedene technische Geräte zum Aufbau einer externen Datenverbindung sein, die beispielsweise eine Kommunikationsverbindung ins Internet während des Betriebs des Fahrzeugs ermöglichen. Eine solche Bordkommunikationseinrichtung unterscheidet sich von der Anbindung von Passagiergeräten an eine externe Datenverbindung, die häufig auch dazu eingerichtet sind, externe Datenverbindungen aufzubauen, durch eine erhöhte Leistungsfähigkeit in Bezug auf die mögliche Reichweite der Funkstrecke. Vorteilhaft ist vor allem eine satellitengestützte externe Datenverbindung, da während der Fahrt eines Fahrzeugs aufgrund der räumlichen Distanz zu etwaigen Funkstationen oder -masten, die die Passagiergeräte zum Aufbau einer externen Datenverbindung üblicherweise nutzen könnten, eine externe Datenverbindung nicht oder eingeschränkt möglich sein kann. Dies ist insbesondere von Bedeutung, wenn es sich bei dem Fahrzeug um Schiffe oder Flugzeuge handelt, die sich über großen Wasserflächen bewegen, wo typischerweise keine oder weniger bodengebundene Funkstationen verfügbar sind. Letztlich sind Boden-Luft-Datenverbindungen aber nicht ausgeschlossen.

Vorzugsweise ist das Bordkommunikationsgerät eine Vermittlungseinheit für eine drahtlose Datenverbindung zwischen mindestens zwei baugleichen Bordkommunikationsgeräten im Fahrzeug. Eine integrierte Funktionalität als Vermittlungseinheit ist vorteilhaft, weil durch die Anbindung eines Bordkommunikationsgerätes an eine Bordkommunikationseinrichtung jedes Bordkommunikationsgerät im Fahrzeug auf die externe Datenverbindung der Bordkommunikationseinrichtung zugreifen kann. Hierfür ist das unabhängige Funkmodul zur drahtlosen Kommunikation der Bordkommunikationsgeräte untereinander vorteilhaft, weil durch die Funktion als Vermittlungseinheit ein datenintensives Übertragen von Medieninhalten vom Medienserver, z.B. Filme, auf die Passagiergeräte mit der Funkeinheit des Funkdatenzugangspunkts nicht negativ beeinflusst wird.

Weiterhin ist das Bordkommunikationsgerät vorzugsweise eine Vermittlungseinheit für mindestens eine drahtlose Datenverbindung zwischen mindestens einem Passagiergerät und der Bordkommunikationseinrichtung für eine externe Datenverbindung. Das Bordkommunikationsgerät kann als Vermittlungseinheit die externe Datenverbindung mindestens einem Passagiergerät für eingehende und/oder ausgehende Datenverbindungen zur Verfügung stellen, so dass die Passagiere mit ihrem Passagiergerät während des Aufenthalts im Fahrzeug Zugriff auf große Datennetze, wie beispielsweise das Internet oder Telefonnetz, haben können.

In einer vorteilhaften Ausführungsform ist das Bordkommunikationsgerät dazu eingerichtet, mittels einer Steuerleitung an- und/oder abgeschaltet zu werden. Die Steuerleitung dient zur Übertragung eines Schaltbefehls an das Bordkommunikationsgerät, der z.B. von einer Bedieneinrichtung im Fahrzeug gegeben werden kann. Alternativ kann das Bordkommunikationsgerät bspw. durch An- und Abschalten der Stromversorgung des Bordkommunikationsgerätes an- und abgeschaltet werden.

Vorzugsweise ist das Bordkommunikationsgerät dazu eingerichtet, durch eine Rundsteuerung über die Stromversorgung des Bordkommunikationsgeräts an- und/oder abgeschaltet zu werden. Eine Rundsteuerung ist eine Übertragung von Steuerbefehlen durch eine gezielte zeitliche Variation der Spannung der Stromversorgung. Dies ist vorteilhaft, weil durch die Rundsteuerung einfache Steuerbefehle an das Bordkommunikationsgerät übertragen werden können, ohne dass eine Steuerleitung neben dem Stromanschluss im Fahrzeug zur Steuerung des Bordkommunikationsgerätes notwendig ist.

Das Bordkommunikationsgerät ist in einer vorteilhaften Ausführungsform dazu eingerichtet, die Sendefunktionen der Funkeinheiten und/oder -module nach Empfang eines bestimmten Signals automatisch an- oder abzuschalten. Das Bordkommunikationsgerät ist für den sicheren Betrieb des Fahrzeugs nicht notwendig, so dass an dieses geringere Sicherheits- und Redundanzanforderungen gestellt werden können. Allerdings gelten vor allem im Bereich der Luftfahrt besondere Anforderungen an die elektromagnetische Verträglichkeit, um eine Gefährdung des Flugbetriebs durch Störung von elektronischen Geräten, wie z.B. Fluginstrumente, auszuschließen. Als besonders kritisch werden die Start- und Landephase eines Luftfahrzeugs angesehen, so dass in diesen Phasen der Betrieb von funkaktiven Geräten im Passagierbereich derzeit nicht erlaubt ist. Die Passagiere werden in der Regel gebeten, ihre elektronischen Geräte in diesen Flugphasen abzuschalten. Das Bordkommunikationsgerät ist für den Flugbetrieb nicht notwendig, so dass dieses Gerät ebenfalls in diesen Flugphasen abgeschaltet werden soll. Eine einfache automatische Abschaltung der Sendefunktionen ist mittels eines bestimmten Signals möglich. Ein solches Signal kann beispielsweise in einer vorteilhaften Ausführungsform ein Funksignal sein. Ein Anschalten der Sendefunktion kann nach Abschluss der kritischen Flugphase erfolgen, so dass die Kommunikation mit den Passagiergeräten zur Erhöhung des Reisekomforts aufgenommen werden kann.

Vorzugsweise ist das Bordkommunikationsgerät zur Ausgabe eines Funksignals zur An- oder Abschaltung der Funkeinheiten und/oder -module mindestens eines weiteren Bordkommunikationsgeräts im Fahrzeug eingerichtet. Dadurch kann ein Bordkommunikationsgerät im Fahrzeug alle anderen Bordkommunikationsgeräte an- oder abschalten, wodurch eine Steuerung aller Bordkommunikationsgeräte über ein Bordkommunikationsgerät möglich ist, an das eine Bedieneinrichtung angeschlossen sein kann. Dies vereinfacht die Handhabung bei der Verwendung von mehreren Bordkommunikationsgeräten in einem Fahrzeug, so dass eine zentrale Steuerung mehrerer oder aller Bordkommunikationsgeräte im Fahrzeug möglich ist.

Weiterhin kann ein in einem Bordkommunikationsgerät eingegangenes Signal vor dem Ausführen des enthaltenen Befehls, z.B.

Abschalten der Sendefunktionen, weitergeleitet werden, um beispielsweise größere Distanzen in der Kabine zu anderen Bordkommunikationsgeräten zu überbrücken.

Das Bordkommunikationsgerät ist in einer vorteilhaften Ausführungsform dazu eingerichtet, durch eine An- oder Abschaltung der Stromversorgung an- oder abgeschaltet zu werden. Diese Möglichkeit der Schaltung des Betriebszustands ermöglicht eine einfache und sichere Abschaltung, so dass z.B. luftrechtliche Bestimmungen in einfacher Weise eingehalten werden können.

Vorzugsweise ist das Bordkommunikationsgerät nach einer Anschaltung der Stromversorgung in weniger als 2 Minuten vollständig betriebsbereit. Das Bordkommunikationsgerät weist einen Medienserver auf, der sich nach einer unangekündigten Unterbrechung der Stromversorgung bei einem Einschalten der Stromversorgung bei einem sogenannten Kaltstart wieder hochfährt. In dieser Zeit sind der Medienserver und/oder das Bordkommunikationsgerät nicht in vollem Umfang betriebsbereit, so dass eine kurze Startzeit von weniger als 2 Minuten bevorzugt ist.

In einer vorteilhaften Ausführungsform ist das Bordkommunikationsgerät dazu eingerichtet, seinen Einbauort im Fahrzeug über eine Kodierung eines einbauseitigen Anschlusssteckers des Fahrzeugs zur Stromversorgung zu identifizieren. Eine Kodierung des fahrzeugseitigen Anschlusssteckers ermöglicht eine geräteunabhängige Identifikation des Einbauorts im Fahrzeug, so dass beispielsweise entsprechende Konfigurationen des Bordkommunikationsgeräts über die Kodierung des Anschlusssteckers erfolgen können. Der Austausch eines Bordkommunikationsgerätes vereinfacht sich hierdurch erheblich, da das Bordkommunikationsgerät nach einem Einbau nicht mehr konfiguriert werden muss, und der den Austausch durchführende Wartungstechniker nur einen direkten mechanischen Austausch des gesamten Gerätes vornehmen muss. Eine über den Einbauort im Luftfahrzeug hinausgehende Information in der Kodierung kann beispielsweise eine Kodierung zur Kommunikation mit anderen Bordkommunikationsgeräten im Fahrzeug sein, so dass mit der Kodierung durch den Anschlussstecker ein weiterer Kommunikationsaustausch und somit auch eine Konfiguration des Ersatz- oder Neugerätes durch ein anderes Bordkommunikationsgerät erfolgen kann.

Aktualisierte Mediendaten sind vorteilhafter Weise mit einer mobilen Medienladeeinheit in das Bordkommunikationsgerät übertragbar. Die Medieninhalte in dem Bordkommunikationsgerät werden typischer Weise in gewissen Abständen aktualisiert, um den Passagieren aktuelle und zeitgemäße Medieninhalte zur Verfügung stellen zu können. Dies erfolgt in einer vorteilhaften Ausführungsform mittels einer Medienladeeinheit, die aktualisierte Medieninhalte drahtlos oder kabelgebunden auf ein Bordkommunikationsgerät übertragen kann. Die Übertragung findet typischer Weise während Betriebsunterbrechungen des Fahrzeugs statt. In alternativen Ausführungsformen ist das Laden von Mediendaten über eine Internetverbindung im Betrieb oder in Betriebsunterbrechungen des Fahrzeugs möglich.

Vorzugsweise ist das Bordkommunikationsgerät zur automatischen Übertragung aktualisierter Mediendaten vom Medienserver auf weitere Bordkommunikationsgeräte im Fahrzeug eingerichtet. Dadurch ergibt sich die Möglichkeit, aktualisierte Mediendaten auf nur ein Bordkommunikationsgerät im Fahrzeug zu übertragen, was den notwendigen Arbeitsaufwand für den Ladevorgang mit einer Medienladeeinheit unabhängig von der Anzahl der verwendeten Bordkommunikationsgeräte im Fahrzeug macht. Die aktualisierten Medieninhalte werden unter Nutzung der drahtlosen Datenverbindung zwischen mehreren Bordkommunikationsgeräten im Fahrzeug auf alle anderen Bordkommunikationsgeräte übertragen. Die veralteten Medieninhalte können hierfür überschrieben oder gelöscht werden. Weiterhin kann auf diese Weise sichergestellt werden, dass alle Bordkommunikationsgeräte im Fahrzeug die gleichen Medieninhalte aufweisen. Weiterhin erhöht sich durch die Verteilung der Mediendaten die Betriebssicherheit ohne zusätzliche Sicherungseinrichtungen.

Die Aufgabe der Erfindung wird weiterhin durch ein Bordkommunikationssystem für eine Kabine eines Fahrzeugs gelöst, wobei das Bordkommunikationssystem eine Mehrzahl baugleicher Bordkommunikationsgeräte, wie oben beschrieben, umfasst, die zu einem Drahtlosnetzwerk miteinander verbunden sind.

Mehrere Bordkommunikationsgeräte sind vorteilhaft, weil dadurch eine ausreichende und gleichmäßige Abdeckung mit einer ausreichenden Verbindungsqualität zum nächsten Funkdatenzugangspunkt für die Passagiergeräte in der gesamten Kabine ermöglicht wird. Dies ist insbesondere bei größeren Kabinen, vor allem bei langgestreckten Kabinen, vorteilhaft, um eine möglichst gute Funknetzanbindung für alle Passagiergeräte zu erreichen.

Das Bordkommunikationssystem ermöglicht das Übertragen von Mediendaten, die in den Bordkommunikationsgeräten gespeichert sind, und die Bereitstellung externer Datenverbindungen für eine Mehrzahl von Passagiergeräten, so dass die Passagiere diese Möglichkeiten mit den ihnen bekannten, selbst mitgebrachten Geräten, nutzen können.

Das Bordkommunikationssystem weist durch die Verbindung zu einem Drahtlosnetzwerk eine leichte Installation im Fahrzeug auf. Vor allem ist eine einfache Anpassung des Bordkommunikationssystems an den Bedarf der Leistungsfähigkeit und an die räumliche Verteilung der Nutzer bzw. betriebenen Passagiergeräte in der Kabine des Fahrzeugs möglich. Zusätzliche Bordkommunikationsgeräte können aufgrund der Auslegung des Bordkommunikationssystems mit baugleichen Bordkommunikationsgeräten sehr einfach integriert werden, um beispielsweise einem gestiegenen Anspruch an Übertragungsgeschwindigkeit gerecht zu werden. Durch die Verwendung von nur einer Systemkomponente, dem Bordkommunikationsgerät, ist der Aufwand für Installation und Wartung des Bordkommunikationssystems sehr gering.

Die Erfindung wird im Folgenden anhand bevorzugter Ausführungsformen unter Bezugnahme auf die beigefügten Figuren erläutert. Dabei zeigt:
- Fig. 1: eine schematische Darstellung des Aufbaus eines Bordkommunikationsgerätes;
- Fig. 2: eine schematische Darstellung von zwei Bordkommunikationsgeräten in der Kabine eines Fahrzeugs;
- Fig. 3: eine schematische Darstellung eines Bordkommunikationsgerätes mit Bedienterminal; und
- Fig. 4: eine schematische Darstellung eines Bordkommunikationsgerätes mit einer mobilen Medienladeeinheit.

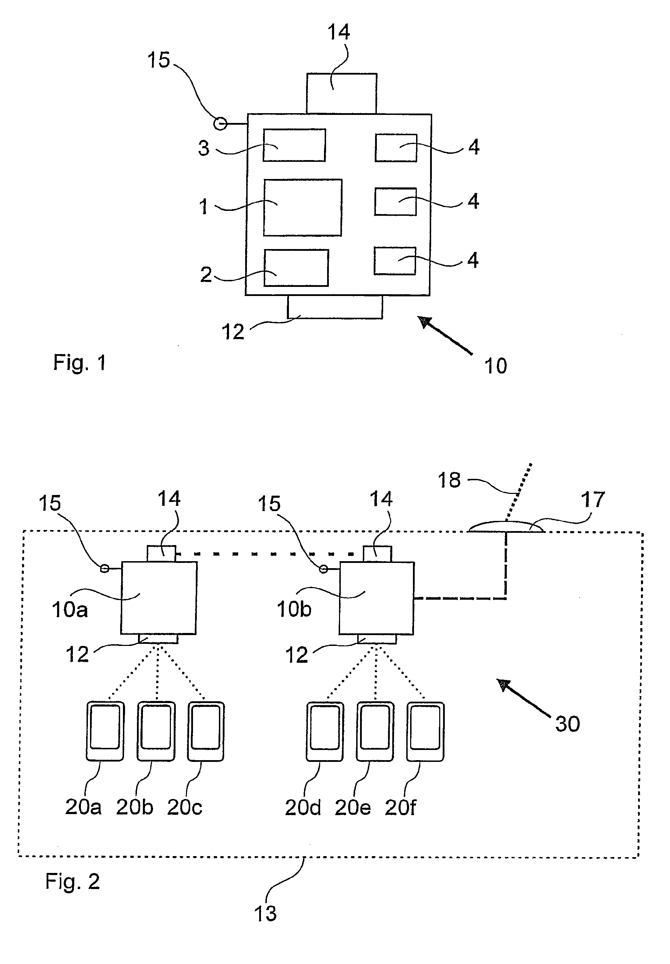

In Fig. 1 ist ein Ausführungsbeispiel eines Bordkommunikationsgerätes 10 schematisch dargestellt. Das Bordkommunikationsgerät 10 weist einen Medienserver 1 auf, der zur Datenverarbeitung und zur Steuerung des Bordkommunikationsgerätes 10 dient. Insbesondere dient der Medienserver 1 zur Verwaltung und Bereitstellung von Medien- und Konfigurationsdaten. Der Medienserver 1 kann ein typisches, an den Bedarf im Bordkommunikationsgerät 10 angepasstes Computermodul sein.

An dem Medienserver 1 ist eine Speichereinheit 2 angeschlossen, in der die entsprechenden Medien- und Konfigurationsdaten gespeichert werden können. In einem vorteilhaften Ausführungsbeispiel ist die Speichereinheit 2 ein gegen mechanische Erschütterungen unempfindlicher Massenspeicher, wie z.B. ein Festkörperlaufwerk bzw. auch Halbleiterlaufwerk.

Das Bordkommunikationsgerät 10 verfügt über einen Funkdatenzugangspunkt mit einer Funkeinheit 12, über die das Bordkommunikationsgerät 10 mit den Passagiergeräten 20 der in einem Fahrzeug 13 befindlichen Personen kommunizieren und Daten übertragen kann. Hierfür werden die bei den Passagiergeräten 20 üblicherweise unterstützten Funkstandards verwendet, wie beispielsweise die als Wireless LAN bekannten IEEE 802.11a/b/g/n. Weiterhin können beispielsweise typische Mobilfunkstandards wie GSM, UMTS und LTE sowie IEEE 802.16 (WiMax) verwendet werden.

Weiterhin verfügt das Bordkommunikationsgerät 10 über ein Funkmodul 14, das von der Funkeinheit 12 unabhängig betrieben werden kann. Hierfür können die gleichen Standards verwendet werden wie bei der Funkeinheit 12. In einem bevorzugten Ausführungsbeispiel weisen die Funkeinheit 12 und das Funkmodul 14 jedoch unterschiedliche Frequenzbereiche auf. Diese unterschiedlichen Frequenzbereiche können beispielsweise ein Frequenzband bei 2,4 GHz und ein Frequenzband bei 5 GHz sein. Weiterhin können sich die Kanäle, Protokolle von Funkeinheit 12 und Funkmodul 14 unterscheiden, so dass eine gegenseitige negative Beeinflussung zwischen beiden vermieden wird. In einem vorteilhaften Ausführungsbeispiel verwendet das Funkmodul 14 den Funkstandard IEEE 802.16. Alternativ können auch andere Funkstandards verwendet werden, wie beispielsweise IEEE 802.11.

Die Funkeinheit 12 und/oder das Funkmodul 14 können jeweils eine Mehrzahl von Sende- und Empfangsantennen aufweisen. Weiterhin unterstützen die Funkeinheit 12 und das Funkmodul 14 typischerweise zur optimalen Ausnutzung der Frequenzbandbreite die sog. MIMO Technologie. Die Funkeinheit 12 und das Funkmodul 14 weisen entsprechende Antennen auf, die vorzugsweise in das Bordkommunikationsgerät 10 integriert sind.

In diesem Ausführungsbeispiel verfügt das Bordkommunikationsgerät 10 über eine Spannungsquelle 3, die alle im Bordkommunikationsgerät 10 benötigten elektrischen Spannungen aus der Stromversorgung 15 des Fahrzeugs 13 erzeugt.

Darüber hinaus verfügt das Bordkommunikationsgerät 10 in diesem Ausführungsbeispiel über verschiedene Schnittstellenmodule 4 für den Anschluss verschiedener optionaler Geräte. Die Schnittstellenmodule 4 können den Anschluss einfacher digitaler Ein- und Ausgänge ermöglichen und/oder einen Anschluss entsprechend üblicher Standards, wie beispielsweise RS232, USB, Ethernet, VGA, DVI und HDMI.

Fig. 2 zeigt in einer schematischen Darstellung eines Ausführungsbeispiels ein Bordkommunikationssystem 30 mit zwei Bordkommunikationsgeräten 10 in einer Kabine eines Fahrzeugs 13. Die Bordkommunikationsgeräte 10 sind im Fahrzeug 13 an örtlich getrennten Positionen installiert und mit einer Stromversorgung 15 des Fahrzeugs 13 verbunden. Es existiert eine drahtlose Datenverbindung zwischen beiden Bordkommunikationsgeräten 10, wodurch der Installationsaufwand sehr gering ist. Weiterhin ist das Bordkommunikationssystem 30 durch die eingesparte Verkabelung zwischen den Geräten leichter, was insbesondere bei einem Luftfahrzeug durch den reduzierten Treibstoffverbrauch bzw. die höhere mögliche Zuladung vorteilhaft ist.

In einem möglichen Ausführungsbeispiel erkennt das Bordkommunikationsgerät 10 anhand einer Kodierung des Anschlusssteckers an die Stromversorgung 15 des Fahrzeugs 13 den Einbauort und die entsprechende Konfiguration, was z.B. verwendete Kanäle oder Funkkodierungen umfassen kann.

Die Bordkommunikationsgeräte 10 stellen über den Funkdatenzugangspunkt Medieninhalte, die im Bordkommunikationsgerät 10 gespeichert sind, den Passagieren auf ihren Passagiergeräten 20 zur Verfügung. Die Passagiere können dadurch während ihres Aufenthalts in der Kabine des Fahrzeugs 13 das vom Fahrzeugbetreiber zur Verfügung gestellte Medienangebot nutzen. Ein solches Medienangebot bezieht sich typischer Weise auf Filme, Musik und Spiele, die über ein Menü auf dem Passagiergerät 20 ausgewählt werden können. Zur Übertragung des Menüs zur Auswahl und später der entsprechenden Medieninhalte wird eine Funkverbindung zwischen den Passagiergeräten 20 und einem Bordkommunikationsgerät 10 genutzt. Die Menüs zur Auswahl können beispielsweise mittels einer separat zu installierenden Software oder über den Aufruf einer Webseite mit einem Browser auf dem Passagiergerät 20 dargestellt werden.

In diesem Ausführungsbeispiel sind mit dem Bordkommunikationsgerät 10a drei Passagiergeräte 20a,20b,20c verbunden, die alle parallel auf die Medieninhalte, die in der Speichereinheit 2 des Bordkommunikationsgerätes 10 gespeichert sind, zugreifen können. Die weiteren Passagiergeräte 20d,20e,20f greifen über die Funkeinheit 12 auf die Mediendaten des in diesem Beispiel für die Verbindungsqualität zu den Passagiergeräten 20d,20e,20f besser positionierten Bordkommunikationsgerätes 10b zu.

Die Bordkommunikationsgeräte 10 umfassen in diesem Ausführungsbeispiel weiterhin jeweils ein Funkmodul 14, mit dem beide Bordkommunikationsgeräte 10 miteinander kommunizieren und Daten austauschen können.

In einem vorteilhaften Ausführungsbeispiel weist mindestens ein Bordkommunikationsgerät 10 einen Anschluss an eine Bordkommunikationseinrichtung 17 auf. Die Bordkommunikationseinrichtung 17 ist in diesem Ausführungsbeispiel am Fahrzeug 13 montiert und dient dazu, eine externe Datenverbindung 18 zu einem weiteren ggf. globalen Netzwerk, wie z.B. Telefonnetz oder Internet, aufzubauen. Hierfür eignen sich für einen relativ ortsunabhängigen Betrieb vor allem satellitengestützte oder auch terrestrische Mobilfunksysteme.

Die externe Datenverbindung 18 wird in einem vorteilhaften Ausführungsbeispiel über eine drahtlose Datenverbindung zwischen mindestens zwei Bordkommunikationsgeräten 10 weitergeleitet, wodurch das weiterleitende Bordkommunikationsgerät 10 als Vermittlungsstelle agiert. Die Weiterleitung kann mehrfach erfolgen, wodurch die externe Datenverbindung 18 der Bordkommunikationseinrichtung 17 von jedem im Fahrzeug 13 vorhandenen Bordkommunikationsgerät 10 benutzt werden kann. Eine solche Weiterleitung oder auch Bereitstellung der externen Datenverbindung 18 auf andere Bordkommunikationsgeräte 10 erfolgt in einem typischen Ausführungsbeispiel über die Funkmodule 14 und getrennt vom Funkdatenverkehr der Funkeinheit 12 der Bordkommunikationsgeräte 10 mit den Passagiergeräten 20.

Weiterhin erfolgt in diesem Ausführungsbeispiel eine Weiterleitung der externen Datenverbindung 18 von den Bordkommunikationsgeräten 10 des Bordkommunikationssystems 30 auf die Passagiergeräte 20. Auf diese Weise können die Passagiere mit ihren Passagiergeräten 20 die externe Datenverbindung 18 nutzen, beispielsweise für Telefonie und Internet. Die Datenübertragung kann hierbei parallel zur Übertragung der Mediendaten über den Funkdatenzugangspunkt erfolgen. Das Bordkommunikationsgerät 10 agiert in diesem Fall auch als Vermittlungseinheit, wobei in einem bevorzugten Ausführungsbeispiel ein Wechsel bzw. Routing der drahtlosen Funkverbindung von Funkmodul 14 zu Funkeinheit 12 erfolgt.

Durch diese Vermittlung der externen Datenverbindung 18 kann ein Passagiergerät 20 den Zugriff auf die externe Datenverbindung 18 über das von seiner Position aus am günstigsten liegende Bordkommunikationsgerät 10 nutzen.

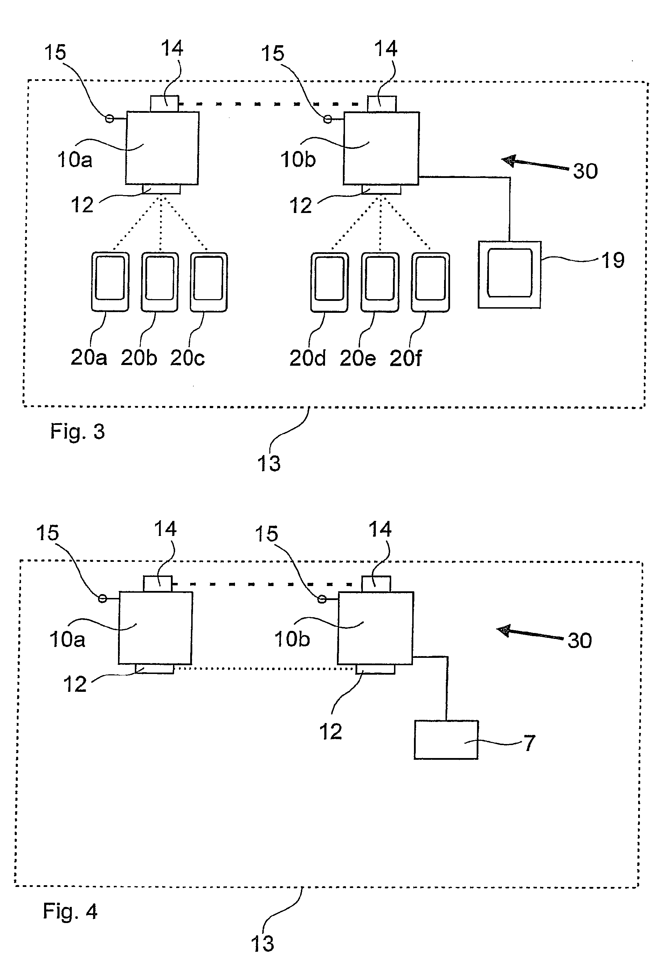

In dem in Fig. 3 dargestellten Ausführungsbeispiel weist mindestens ein Bordkommunikationsgerät 10 ein Bedienterminal 19 auf. Dieses Bedienterminal 19 kann sich kabelgebunden in der Nähe eines Bordkommunikationsgerätes 10 befinden, wodurch das Bordpersonal in geeigneter Weise Einfluss auf das Betriebsverhalten des Bordkommunikationsgerätes 10 und auch des gesamten Bordkommunikationssystems 30 nehmen kann.

In einem möglichen Ausführungsbeispiel ist das Bedienterminal 19 in der Kabine installiert und drahtlos und/oder kabelgebunden mit mindestens einem Bordkommunikationsgerät 10 verbunden. In einem weiteren alternativen Ausführungsbeispiel ist das Bedienterminal 19 ein mobiles Gerät, das drahtlos mit mindestens einem Bordkommunikationsgerät 10 in Verbindung steht, und vom Bordpersonal, ähnlich einer Fernbedienung mitgeführt werden kann.

In Fig. 4 ist eine schematische Darstellung eines Bordkommunikationssystems 30 in einer Betriebsunterbrechung des Fahrzeugs 13 dargestellt. An ein Bordkommunikationsgerät 10 ist in diesem Ausführungsbeispiel eine mobile Medienladeeinheit 7 angeschlossen. Der Anschluss kann hierbei über eine kabelgebundene oder funkbasierte Datenverbindung erfolgen. Auf der mobilen Medienladeeinheit 7 sind aktualisierte Mediendaten gespeichert, die im Weiteren als Medieninhalte den Passagieren angeboten werden sollen. Diese Mediendaten können aktualisierte Medieninhalte sein, oder Medieninhalte für eine andere Gruppe von erwarteten Passagieren aus einem anderen Sprach- und/oder Kulturkreis.

Die aktualisierten Mediendaten werden von der Medienladeeinheit 7 in ein Bordkommunikationsgerät 10 übertragen und dort auf der Speichereinheit 2 gespeichert. Ein veralteter Datensatz kann dabei gelöscht und/oder überschrieben werden.

Das entsprechende Bordkommunikationsgerät 10 mit den aktualisierten Daten führt anschließend oder bereits während des Ladevorgangs der Medienladeeinheit 7 eine automatische Verteilung und Aktualisierung an alle weiteren im Fahrzeug 13 befindlichen Bordkommunikationsgeräte 10 aus. In einem möglichen Ausführungsbeispiel erfolgt eine direkte Spiegelung der Daten in der Speichereinheit 2 des Bordkommunikationsgerätes 10, an dem die Medienladeeinheit 7 angeschlossen ist, zur Übertragung der aktualisierten Mediendaten.

Die drahtlose Datenverbindung zwischen den Bordkommunikationsgeräten 10 wird während der Verteilung der aktualisierten Daten vorzugsweise ausschließlich zur Verteilung genutzt, damit eine schnellstmögliche Verteilung der Daten erreicht wird.

In einem vorteilhaften Ausführungsbeispiel werden die Funkeinheiten 12 der Funkdatenzugangspunkte, die üblicherweise die Verbindung zu den Passagiergeräten 20 herstellen, ebenfalls für die schnellstmögliche Verteilung der Daten genutzt. Im Fall der Verteilung und Aktualisierung der Mediendaten, die üblicherweise ein großes Datenvolumen erfassen, sind die Passagiere und somit die Passagiergeräte 20 typischerweise nicht in der Kabine des Fahrzeugs 13, so dass der mögliche unabhängige Betrieb von Funkmodulen 14 und Funkeinheiten 12 zu einer deutlichen Erhöhung der Übertragungsraten zwischen den Bordkommunikationsgeräten 10 genutzt werden kann. Nach Abschluss der Verteilung der aktualisierten Mediendaten kann das Bordkommunikationssystem 30 ausgeschaltet oder in verschiedene andere Betriebszustände gesetzt werden.

Ein möglicher Betriebszustand des Bordkommunikationssystems 30 ist in diesem Ausführungsbeispiel ein eigenständiger Betrieb der Bordkommunikationsgeräte 10 ohne Kommunikation der Bordkommunikationsgeräte 10 untereinander.

Ein weiterer möglicher Betriebszustand des Bordkommunikationssystems 30 kann die parallele Anbietung von Mediendaten und externer Datenverbindung 18 für die Passagiergeräte 20 umfassen.

In einem weiteren möglichen Betriebszustand werden den Passagiergeräten 20 keine Medieninhalte zur Verfügung gestellt, sondern ausschließlich externe Datenverbindungen 18 angeboten. In einem möglichen Betriebszustand des Bordkommunikationssystems 30 sind alle Bordkommunikationsgeräte 10 in ausgeschaltetem Zustand. Das Ausschalten der Bordkommunikationsgeräte 10 ist insbesondere bei Luftfahrzeugen in kritischen Flugphasen, wie z.B. Start und Landung, von Bedeutung. Weiterhin ist dies naturgemäß in Betriebspausen des Fahrzeugs 13 sinnvoll.

In einem möglichen Ausführungsbeispiel wird die Stromversorgung 15 für die Bordkommunikationsgeräte 10 zur An- und Abschaltung genutzt. Dies ist eine einfache Möglichkeit die Bordkommunikationsgeräte 10 an- und abzuschalten.

Das Bordkommunikationsgerät 10 ist in einem vorteilhaften Ausführungsbeispiel dazu eingerichtet, regelmäßig über eine unangekündigte Unterbrechung der Stromversorgung 15 ausgeschaltet zu werden, so dass beim Anschalten des Bordkommunikationsgeräts 10 ein fehlerfreier Betrieb möglich ist. Das Bordkommunikationsgerät 10 ist in diesem Ausführungsbeispiel besonders für Ausschaltvorgänge ohne Herunterfahren des Medienservers 1 und der elektronischen Komponenten eingerichtet. Weiterhin benötigt insbesondere der Medienserver 1 nach einem Wiederanschalten der Stromversorgung 15 eine gewisse Startzeit bis die volle Betriebsbereitschaft hergestellt ist. Diese Startzeit kann beispielsweise den Bootvorgang bzw. die Zeit zum Hochfahren der elektrischen und/oder elektronischen Komponenten und die entsprechenden Ladezeiten umfassen. Das Anschalten des Bordkommunikationsgerätes 10 nach einer vollständigen Abschaltung der Stromversorgung 15 wird auch als Kaltstart bezeichnet. In diesem vorteilhaften Ausführungsbeispiel beträgt die Startzeit weniger als 2 Minuten. In einem weiteren vorteilhaften Ausführungsbeispiel beträgt die Startzeit weniger als 1 Minute. In einem alternativen Ausführungsbeispiel beträgt die Startzeit weniger als 3 Minuten.

Das Bordkommunikationsgerät 10 ist in einem vorteilhaften Ausführungsbeispiel über eine angeschlossene Steuerleitung steuerbar. Über die Steuerleitung können Schaltbefehle an das Bordkommunikationsgerät 10 übertragen werden, die eine Teilabschaltung von einzelnen Komponenten des Bordkommunikationsgerätes 10, z.B. alle Sende- und Empfangseinrichtungen, ermöglicht. Weiterhin können über die Steuerleitung verschiedene weitere Steuerbefehle übertragen werden, die eine Steuerung des Betriebsverhaltens des Bordkommunikationsgerätes ermöglichen.

Weiterhin können die Bordkommunikationsgeräte 10 in einem bevorzugten Ausführungsbeispiel über eine Rundsteuerung durch die Stromversorgung 15 an- und/oder abgeschaltet werden. Durch die Rundsteuerung können einfache Befehle an die Bordkommunikationsgeräte 10 übertragen werden, die neben einer Anund/oder Abschaltung auch eine Abschaltung von einzelnen Komponenten und eine Steuerung der Betriebsfunktionen ermöglichen. Die Steuerbefehle werden beispielsweise durch die Spannungsquelle 3 aus der Spannung der Stromversorgung 15 ausgelesen.

In einem bevorzugten Ausführungsbeispiel sind die Bordkommunikationsgeräte 10 mit einem bestimmten Signal, insbesondere einem Funksignal an- und ausschaltbar. Die Abschaltung kann eine völlige Abschaltung aller Komponenten des Bordkommunikationsgerätes 10 bedeuten, oder aber auch nur eine Abschaltung der aktiven Sendefunktionen, so dass eine elektromagnetische Störung von elektronischen Komponenten des Fahrzeugs 13 zeitweise, beispielsweise bei Start und Landung, vermieden werden kann. Eine Abschaltung nur der Sendefunktionen ermöglicht weiterhin den Empfang von Signalen, beispielsweise Funksignalen, wodurch das Bordkommunikationsgerät 10 wieder in einen aktiven Betriebszustand versetzt werden kann. Hierfür kann eine physikalische Trennung der Sende- und Empfangselemente im Funkmodul 14 und in der Funkeinheit 12 sinnvoll sein.

In einem vorteilhaften Ausführungsbeispiel ist das Bordkommunikationsgerät 10 dazu eingerichtet, ein bestimmtes Funksignal zur An- oder Abschaltung der anderen Bordkommunikationsgeräte 10 auszusenden. Dadurch kann ein Schaltbefehl von einem an diesem Bordkommunikationsgerät 10 angeschlossenen Bedienterminal auf alle anderen Bordkommunikationsgeräte 10 des Bordkommunikationssystems 30 übertragen werden.

## Patentansprüche

1. Bordkommunikationsgerät (10) für eine Kabine eines Fahrzeugs (13), wobei das Bordkommunikationsgerät (10) mindestens einen Funkdatenzugangspunkt mit einer Funkeinheit (12) zur drahtlosen Übertragung von Mediendaten umfasst, **dadurch gekennzeichnet, dass** das Bordkommunikationsgerät (10) mindestens einen Medienserver (1) umfasst, wobei die Funkeinheit (12) zur Übertragung der Medieninhalte von dem Medienserver (1) des Bordkommunikationsgerätes (10) auf mindestens ein Passagiergerät (20) in der Kabine eingerichtet ist, wobei das Bordkommunikationsgerät (10) mindestens ein von der Funkeinheit (12) unabhängiges Funkmodul (14) zur drahtlosen Kommunikation des Bordkommunikationsgeräts (10) mit einem weiteren Bordkommunikationsgerät (10) aufweist.

2. Bordkommunikationsgerät (10) nach Anspruch 1, **dadurch gekennzeichnet, dass** drahtloser Datenaustausch mit mindestens einem weiteren baugleichen Bordkommunikationsgerät (10) ohne Einschränkungen der möglichen Übertragungsraten von drahtlosen Datenübertragungen zwischen dem Bordkommunikationsgerät (10) und Passagiergeräten (20) durchführbar ist.

3. Bordkommunikationsgerät(10) nach einem der vorangehenden Ansprüche, **dadurch gekennzeichnet, dass** das Funkmodul (14) und die Funkeinheit (12) unterschiedliche Frequenzbereiche aufweisen.

4. Bordkommunikationsgerät (10) nach einem der vorangehenden Ansprüche, **dadurch gekennzeichnet, dass** das Funkmodul (14) und die Funkeinheit (12) unterschiedliche Kanäle und/oder Datenprotokolle aufweisen.

5. Bordkommunikationsgerät (10) nach einem der vorangehenden Ansprüche, **dadurch gekennzeichnet, dass** mindestens ein Bordkommunikationsgerät (10) im Fahrzeug (13) mit einer Bordkommunikationseinrichtung (17) des Fahrzeugs (13) für externe Datenverbindungen (18) verbunden ist.

6. Bordkommunikationsgerät (10) nach Anspruch 5, **dadurch gekennzeichnet, dass** das Bordkommunikationsgerät (10) eine Vermittlungseinheit für eine drahtlose Datenverbindung zwischen mindestens zwei baugleichen Bordkommunikationsgeräten (10) im Fahrzeug (13) ist.

7. Bordkommunikationsgerät (10) nach Anspruch 5 oder 6,
**dadurch gekennzeichnet, dass** das Bordkommunikationsgerät (10) eine Vermittlungseinheit für mindestens eine drahtlose Datenverbindung zwischen mindestens einem Passagiergerät (20) und der Bordkommunikationseinrichtung (17) für eine externe Datenverbindung (18) ist.

8. Bordkommunikationsgerät (10) nach einem der vorangehenden Ansprüche, **dadurch gekennzeichnet, dass** das Bordkommunikationsgerät (10) dazu eingerichtet ist, durch mindestens eine aus der Gruppe der folgenden Möglichkeiten an- und/oder abgeschaltet zu werden:
- mittels einer Steuerleitung;
- durch eine Rundsteuerung über die Stromversorgung (15); und/oder
- durch eine An- oder Abschaltung der Stromversorgung (15).

9. Bordkommunikationsgerät (10) nach einem der vorangehenden Ansprüche, **dadurch gekennzeichnet, dass** das Bordkommunikationsgerät nach einer Anschaltung der Stromversorgung in weniger als 2 Minuten vollständig betriebsbereit ist.

10. Bordkommunikationsgerät (10) nach einem der vorangehenden Ansprüche, **dadurch gekennzeichnet, dass** das Bordkommunikationsgerät (10) dazu eingerichtet ist, die Sendefunktionen der Funkeinheit (12) und/oder des Funkmoduls (14) nach Empfang eines bestimmten Signals an- oder abzuschalten.

11. Bordkommunikationsgerät (10) nach einem der vorangehenden Ansprüche, **dadurch gekennzeichnet, dass** das Bordkommunikationsgerät (10) zur Ausgabe eines Funksignals zur An- oder Abschaltung der Funkeinheit (12) und/oder des Funkmoduls (14) mindestens eines weiteren Bordkommunikationsgeräts (10) im Fahrzeug (13) eingerichtet ist.

12. Bordkommunikationsgerät (10) nach einem der vorangehenden Ansprüche, **dadurch gekennzeichnet, dass** das Bordkommunikationsgerät (10) dazu eingerichtet ist, seinen Einbauort im Fahrzeug (13) über eine Kodierung eines einbauseitigen Anschlusssteckers des Fahrzeugs (13) zur Stromversorgung (15) zu identifizieren.

13. Bordkommunikationsgerät (10) nach einem der vorangehenden Ansprüche, **dadurch gekennzeichnet, dass** aktualisierte Mediendaten mit einer mobilen Medienladeeinheit (7) in das Bordkommunikationsgerät (10) übertragbar sind.

14. Bordkommunikationsgerät (10) nach einem der vorangehenden Ansprüche, **dadurch gekennzeichnet, dass** das Bordkommunikationsgerät (10) zur automatischen Übertragung aktualisierter Mediendaten vom Medienserver (1) auf weitere Bordkommunikationsgeräte (10) im Fahrzeug (13) eingerichtet ist.

15. Bordkommunikationssystem (30) für eine Kabine eines Fahrzeugs (13), **dadurch gekennzeichnet, dass** das Bordkommunikationssystem (30) eine Mehrzahl baugleicher Bordkommunikationsgeräte (10) nach einem der vorangehenden Ansprüche umfasst, die zu einem Drahtlosnetzwerk miteinander verbunden sind.

## Claims

1. On-board communication device (10) for a cabin of a vehicle (13), wherein the on-board communication device (10) comprises at least one wireless data access point with a radio unit (12) for wireless transmission of media data, **characterised in that** the on-board communication device (10) comprises at least one media server (1), wherein the radio unit (12) is configured for the transmission of the media contents from the media server (1) of the on-board communication device (10) to at least one passenger device (20) in the cabin, wherein the on-board communication device (10) comprises at least one radio module (14), which is independent of the radio unit (12), for wireless communication of the on-board communication device (10) with a further on-board communication device (10).

2. On-board communication device (10) according to claim 1, **characterised in that** wireless data exchange with at least one further identically constructed on-board communication device (10) can be carried out without restrictions to the possible transfer rates of wireless data transmissions between the on-board communication device (10) and passenger devices (20).

3. On-board communication device (10) according to any of the preceding claims, **characterised in that** the radio module (14) and the radio unit (12) have different frequency ranges.

4. On-board communication device (10) according to any of the preceding claims, **characterised in that** the radio module (14) and the radio unit (12) have different channels and/or data protocols.

5. On-board communication device (10) according to any of the preceding claims, **characterised in that** at least one on-board communication device (10) in the vehicle (13) is connected to an on-board communication means (17) of the vehicle (13) for external data connections (18).

6. On-board communication device (10) according to claim 5, **characterised in that** the on-board communication device (10) is a switching unit for a wireless data connection between at least two identically constructed on-board communication devices (10) in the vehicle (13).

7. On-board communication device (10) according to either claim 5 or claim 6, **characterised in that** the on-board communication device (10) is a switching unit for at least one wireless data connection between at least one passenger device (20) and the on-board communication means (17) for an external data connection (18).

8. On-board communication device (10) according to any of the preceding claims, **characterised in that** the on-board communication device (10) is configured to be switched on and/or off by at least one from the group of the following possibilities:
- by means of a control line;
- by a ripple control via the power supply (15); and/or
- by switching the power supply (15) on or off.

9. On-board communication device (10) according to any of the preceding claims, **characterised in that** the on-board communication device is completely ready for operation in less than 2 minutes once the power supply has been switched on.

10. On-board communication device (10) according to any of the preceding claims, **characterised in that** the on-board communication device (10) is configured to switch the send functions of the radio unit (12) and/or of the radio module (14) on or off once a particular signal has been received.

11. On-board communication device (10) according to any of the preceding claims, **characterised in that** the on-board communication device (10) is configured to emit a radio signal for switching the radio unit (12) and/or the radio module (14) of at least one further on-board communication device (10) in the vehicle (13) on or off.

12. On-board communication device (10) according to any of the preceding claims, **characterised in that** the on-board communication device (10) is configured to identify its installation location in the vehicle (13) by means of coding of an installation-side plug connector of the vehicle (13) to the power supply (15).

13. On-board communication device (10) according to any of the preceding claims, **characterised in that** updated media data can be transferred into the on-board communication device (10) with a mobile media-loading unit (7).

14. On-board communication device (10) according to any of the preceding claims, **characterised in that** the on-board communication device (10) is configured for the automatic transmission of updated media data from the media server (1) to further on-board communication devices (10) in the vehicle (13).

15. On-board communication system (30) for a cabin of a vehicle (13), **characterised in that** the on-board communication system (30) comprises a plurality of identically constructed on-board communication devices (10) according to any of the preceding claims which are connected together to form a wireless network.

## Revendications

1. Appareil de communication embarqué (10) pour une cabine d'un véhicule (13), dans lequel l'appareil de communication embarqué (10) comprend au moins un point d'accès à des données radio comportant une unité radio (12) pour la transmission sans fil de données média, **caractérisé en ce que** l'appareil de communication embarqué (10) comprend au moins un serveur média (1), dans lequel l'unité radio (12) est configurée pour la transmission des contenus média du serveur média (1) de l'appareil de communication embarqué (10) sur au moins un appareil de passager (20) situé dans la cabine, dans lequel l'appareil de communication embarqué (10) présente au moins un module radio (14) indépendant de l'unité radio (12) pour la communication sans fil de l'appareil de communication embarqué (10) avec un appareil de communication embarqué (10) supplémentaire.

2. Appareil de communication embarqué (10) selon la revendication 1, **caractérisé en ce que** l'échange de données sans fil avec au moins un appareil de communication embarqué (10) supplémentaire de construction identique est réalisable sans restriction des débits de données possibles de transmissions de données sans fil entre l'appareil de communication embarqué (10) et des appareils de passagers (20).

3. Appareil de communication embarqué (10) selon l'une quelconque des revendications précédentes, **caractérisé en ce que** le module radio (14) et l'unité radio (12) présentent différentes bandes de fréquence.

4. Appareil de communication embarqué (10) selon l'une quelconque des revendications précédentes, **caractérisé en ce que** le module radio (14) et l'unité radio (12) présentent différents canaux et/ou différents protocoles de données.

5. Appareil de communication embarqué (10) selon l'une quelconque des revendications précédentes, **caractérisé en ce qu'**au moins un appareil de communication embarqué (10) dans le véhicule (13) est relié à un dispositif de communication embarqué (17) du véhicule (13) pour des liaisons de données externes (18).

6. Appareil de communication embarqué (10) selon la revendication 5, **caractérisé en ce que** l'appareil de communication embarqué (10) est une unité de commutation pour une liaison de données sans fil entre au moins deux appareils de communication embarqués (10) de construction identique dans le véhicule (13).

7. Appareil de communication embarqué (10) selon la revendication 5 ou 6, **caractérisé en ce que** l'appareil de communication embarqué (10) est une unité de commutation pour au moins une liaison de données sans fil entre au moins un appareil de passager (20) et le dispositif de communication embarqué (17) pour une liaison de données externe (18).

8. Appareil de communication embarqué (10) selon l'une quelconque des revendications précédentes, **caractérisé en ce que** l'appareil de communication embarqué (10) est configuré pour être mis en fonction et/ou hors fonction au moyen d'au moins une du groupe des possibilités suivantes :
- au moyen d'une ligne de commande ;
- par une télécommande centralisée par l'intermédiaire de l'alimentation en courant (15) ; et/ou
- par une mise sous tension ou une coupure de l'alimentation en courant (15).

9. Appareil de communication embarqué (10) selon l'une quelconque des revendications précédentes, **caractérisé en ce que** l'appareil de communication embarqué, après une mise sous tension de l'alimentation en courant, est totalement prêt à fonctionner en moins de 2 minutes.

10. Appareil de communication embarqué (10) selon l'une quelconque des revendications précédentes, **caractérisé en ce que** l'appareil de communication embarqué (10) est configuré pour connecter ou déconnecter les fonctions émettrices de l'unité radio (12) et/ou du module radio (14) après la réception d'un certain signal.

11. Appareil de communication embarqué (10) selon l'une quelconque des revendications précédentes, **caractérisé en ce que** l'appareil de communication embarqué (10) est configuré pour la sortie d'un signal radio destiné à connecter ou déconnecter l'unité radio (12) et/ou le module radio (14) d'au moins un appareil de communication embarqué (10) supplémentaire dans le véhicule (13).

12. Appareil de communication embarqué (10) selon l'une quelconque des revendications précédentes, **caractérisé en ce que** l'appareil de communication embarqué (10) est configuré pour identifier son emplacement d'installation dans le véhicule (13) par l'intermédiaire d'un codage d'une fiche de raccordement, côté montage, du véhicule (13) destinée à l'alimentation en courant (15).

13. Appareil de communication embarqué (10) selon l'une quelconque des revendications précédentes, **caractérisé en ce que** des donnés média mises à jour sont transmissible dans l'appareil de communication embarqué (10) à l'aide d'une unité de charge média mobile (7).

14. Appareil de communication embarqué (10) selon l'une quelconque des revendications précédentes, **caractérisé en ce que** l'appareil de communication embarqué (10) est configuré pour la transmission automatique de données média mises à jour, du serveur média (1) sur des appareils de communication embarqués (10) supplémentaires dans le véhicule (13).

15. Système de communication embarqué (30) pour une cabine d'un véhicule (13), **caractérisé en ce que** le système de communication embarqué (30) comprend une pluralité d'appareils de communication embarqués (10) de construction identique, selon l'une quelconque des revendications précédentes, qui sont connectés entre eux en un réseau sans fil.
